# NEUE EUROPÄISCHE PATENTSCHRIFT

(11) **EP 0 614 724 B2**
(45) Veröffentlichungstag und Bekanntmachung des Hinweises auf die Entscheidung über den Einspruch: **15.10.2008**
(45) Hinweis auf die Patenterteilung: 02.01.2002
(21) Anmeldenummer: 94103373.0
(22) Anmeldetag: 05.03.1994
(51) Int. Cl.: B23Q 7/14

(54) **Werkzeugmaschine**
Machine tool
Machine-outil

(30) Priorität: 10.03.1993 DE 4307482
(43) Veröffentlichungstag der Anmeldung: 14.09.1994
(60) Teilanmeldung: 01119020.4
(73) Patentinhaber: Ex-Cell-O GmbH, 73054 Eislingen/Fils (DE)
(72) Erfinder: Fritz, Hermann, Dr., D-73557 Mutlangen (DE); Staiger, Hans, D-73033 Göppingen (DE); Winckler, Friedrich, D-73527 Schwäbisch Gmünd (DE)
(74) Vertreter: Hoeger, Stellrecht & Partner Patentanwälte

(56) Entgegenhaltungen:
- EP-A- 0 420 735
- DD-A- 241 220
- DE-A- 2 358 421
- DE-A- 3 320 738
- JP-A- 4 365 529
- JP-A- 58 186 364
- US-A- 3 188 891
- US-A- 4 505 464
- US-A- 4 595 870
- US-A- 4 742 609
- US-A- 4 749 921
- US-A- 4 798 985
- US-A- 4 812 725
- US-A- 4 834 353
- US-A- 4 987 668
- PATENT ABSTRACTS OF JAPAN vol. 14, no. 10 (M-917) (3953) 10. Januar 1990 & JP-A-01 257 544 (FANUC) 13. Oktober 1989
- PATENT ABSTRACTS OF JAPAN vol. 10, no. 333 (M-534) (2389) 12. November 1986 & JP-A-61 136 753 (OMRON TATEISI ELECTRONICS) 24. Juni 1986
- PATENT ABSTRACTS OF JAPAN vol. 8, no. 2 (M-266) (1439) 7. Januar 1984 & JP-A-58 165 950 (HITACHI SEIKI) 1. Oktober 1983
- PATENT ABSTRACTS OF JAPAN vol. 14, no. 315 (M-995) (4258) 6. Juli 1990 & JP-A-02 106 247 (MAKINO MILLING) 18. April 1990

## Beschreibung

Die Erfindung betrifft eine Werkzeugmaschine, gemäß dem Oberbegriff von Anspruch 1.

Eine solche Werkzeugmaschine ist aus der JP 4-365 529 A bekannt.

Eine Werkzeugmaschine umfassend ein Maschinengestell, einen am Maschinengestell angeordneten Werkstückträger für ein zu bearbeitendes Werkstück, eine am Maschinengestell bewegbar angeordnete Werkzeugspindel zur Aufnahme eines Werkzeugs, einen ersten die Werkzeugspindel tragenden Schlitten, welcher längs einer ersten Achse bewegbar und an einem ersten Schlittenträger geführt ist, einen längs einer zweiten, quer zur ersten Achse verlaufenden Achse verfahrbaren und den ersten Schlittenträger umfassenden zweiten Schlitten, welcher an einem zweiten als eine zweite Mittelöffnung umgebendes Joch ausgebildeten Schlittenträger geführt ist, wobei der zweite Schlittenträger Teil des Maschinengestells ist, und einen ersten und einen zweiten Antrieb zur Durchführung einer Relativbewegung zwischen dem Werkzeug und dem Werkstück in Richtung der Achsen ist aus der US 4,987,668 bekannt, wobei bei dieser der zweite Schlittenträger ein geschlossenes Portal bildet, an dessen beiden Säulen der erste Schlittenträger geführt ist.

Der Erfindung liegt die Aufgabe zugrunde, eine Werkzeugmaschine der gattungsgemäßen Art derart zu verbessern, daß diese eine möglichst stabile Konstruktion aufweist und sich eine möglichst hohe Dynamik erreichen läßt.

Diese Aufgabe wird bei einer Werkzeugmaschine der eingangs beschriebenen Art erfindungsgemäß mit den kennzeichnenden Merkmalen gemäß Anspruch 1 gelöst.

Der Vorteil der erfindungsgemäßen Lösung ist somit darin zu sehen, daß mit dieser eine stabile und steife Konstruktion zur Positionierung der Werkzeugspindel zur Verfügung steht.

Eine möglichst hohe Dynamik bei der Bewegung der Werkzeugspindel läßt sich dann erreichen, wenn mindestens der erste Antrieb und der zweite Antrieb zwei parallel zu der jeweiligen Achse ausgerichtete, in einer Querrichtung im Abstand voneinander angeordnete elektrische Linearmotoren umfaßt, wenn der durch diese Linearmotoren bewegbare jeweilige Schlitten sich zwischen den beiden Linearmotoren erstreckt und wenn eine Steuerung vorgesehen ist, welche die Linearmotoren zum Verfahren des jeweiligen Schlittens gleichzeitig betreibt.

Durch das erfindungsgemäße Konzept der Verwendung zweier parallel zu der Achse ausgerichteter Linearmotoren, die gleichzeitig zum Verschieben des Schlittens eingesetzt werden, ist eine große Dynamik zum Antrieb des Schlittens erreichbar, da die bei rotierenden Spindelantrieben üblichen Limitierungen nicht mehr gegeben sind. Außerdem entfallen die bei den bekannten Spindelantrieben üblichen Probleme mit Spiel, Elastizität, Reibung und Verschleiß.

Besondere Vorteile sind neben der großen Beschleunigung und der großen Geschwindigkeiten noch große Verfahrwege und genaue Positionierung.

Zusätzliche Vorteile bringt die Verwendung zweier gleichzeitig betriebener Linearmotoren, da diese in einfacher Weise besonders hohe Beschleunigungskräfte für eine hochdynamische Bewegung des Schlittens liefern.

Die beiden Linearmotoren können in unterschiedlichster Art und Weise betrieben werden.

So sieht eine vorteilhafte Lösungsmöglichkeit vor, daß die beiden Linearmotoren gemeinsam als eine einzige NC-Achse betrieben werden. Vorteilhafterweise sind hierbei allerdings trotz der gemeinsamen Ansteuerung als NC-Achse getrennte Stromversorgungen vorgesehen. Diese Möglichkeit ist steuerungstechnisch kostengünstig zu realisieren.

Alternativ dazu ist vorgesehen, daß die beiden Linearmotoren als voneinander unabhängige NC-Achsen ansteuerbar sind. Das heißt, daß jeder der Linearmotoren eine eigene NC-Achsen-Steuerung und eine eigene Stromversorgung aufweist. Dies hat den Vorteil, daß damit die Bewegung der beiden Linearmotoren besser aufeinander abstimmbar ist.

Dies ist besonders vorteilhaft dann möglich, wenn jedem Linearmotor ein eigenes Wegmeßsystem zugeordnet ist.

Insbesondere läßt sich dann durch aktive Steuerung der Linearmotoren ein Parallelverschieben des Schlittens realisieren, so daß einerseits auf Führungen des Schlittens im wesentlichen keinerlei Querkräfte mehr wirken, welche zu einem Verkanten des Schlittens führen könnten.

Die Linearmotoren können in unterschiedlichster Art und Weise aufgebaut sein. Zweckmäßigerweise kommen Einzelkamm-Linearmotoren zum Einsatz.

Bei einer bevorzugten Lösung umfassen die Linearmotoren dabei parallel zu einer Ebene ausgerichtete Primär- und Sekundärteile als Linearmotorteile.

Eine besonders kompakte Bauweise beim Einsatz derartiger Linearmotoren läßt sich dann erreichen, wenn die Ebene, in welcher sich die Linearmotorteile erstrecken, quer zur Querrichtung verläuft.

Um die Wärme der Linearmotoren gut abführen zu können ist es ferner vorteilhaft, wenn die Linearmotoren jeweils beiderseits in äußeren Bereichen des Schlittens und eines Schlittenträgers angeordnet sind.

Besonders vorteilhaft ist die Anordnung der Linearmotoren dann, wenn diese an jeweils gegenüberliegenden Außenseiten des Schlittenträgers oder des Schlittens angeordnet sind. Bei dieser Lösung ist eine optimale Abfuhr der von den Linearmotoren erzeugten Wärme in die Umgebung und andererseits eine möglichst kompakte Bauweise des Schlittens oder des Schlittenträgers in Richtung der jeweiligen Achse möglich.

Hinsichtlich der Führung des Schlittens wurden im Zusammenhang mit der Erläuterung der bisherigen Ausführungsbeispiele keine weiteren Angaben gemacht. Beispielsweise wäre es denkbar, den Schlitten an einer Hauptführung zu führen. Besonders vorteilhaft ist es jedoch, insbesondere hinsichtlich der Genauigkeit und der Exaktheit der Führung des Schlittens, wenn der Schlitten an zwei zueinander parallelen und im Abstand voneinander verlaufenden Hauptführungen geführt ist.

Um eine kompakte Bauweise zu erreichen und andererseits - wie vorstehend dargelegt - die Möglichkeit einer optimalen Kühlung der Linearmotoren zu schaffen, ist vorteilhafterweise vorgesehen, daß die Hauptführungen zwischen den Linearmotoren angeordnet sind.

Bei dieser bezüglich der Hauptführungen außenliegenden Anordnung der Linearmotoren könnten aufgrund der zwischen den Linearmotorteilen wirkenden Kräfte Stabilitätsprobleme auftreten.

Diese Stabilitätsprobleme sind vorteilhafterweise dadurch gelöst, daß die jeweiligen Linearmotoren jeweils zwischen einer Haupt- und einer Zusatzführung liegen, wobei die beiden Führungen zwischen dem Schlitten und dem jeweiligen Schlittenträger wirken. Das Vorsehen der Zusatzführungen erlaubt somit eine stabile Führung der Linearmotorteile relativ zueinander und eine ausreichende Steifigkeit bei möglichst geringer Masse von Schlitten und Schlittenträger und somit eine hohe Dynamik.

Um eine optimale Kühlung zu erreichen, ist vorzugsweise vorgesehen, daß die Linearmotoren gekühlte Primär- und Sekundärteile aufweisen.

Eine derartige Kühlung kann in unterschiedlichster Weise erfolgen. Vorzugsweise sieht ein Ausführungsbeispiel vor, daß die Kühlung der Primär- und Sekundärteile durch Kühlkanäle in Halteelementen für die Primär- und Sekundärteile erfolgt, so daß diese durch direkten Kontakt mit den jeweils diese tragenden Halteelementen kühlbar sind.

Vorzugsweise sind die Kühlkanäle mit einem Kühlmedium durchströmt, welches von einer Kühleinrichtung auf eine definierte Temperatur kühlbar ist.

Im Zusammenhang mit der Erläuterung der bisherigen Ausführungsbeispiele wurde lediglich darauf eingegangen, wie eine optimale Dynamik des Schlittens erreichbar ist. Bei Verwendung elektrischer Linearmotoren ist sowohl ein Beschleunigen als auch ein Bremsen mit diesen Linearmotoren möglich.

Trotzdem ist es - insbesondere aus Sicherheitsgründen - vorteilhaft, wenn der Schlitten noch zusätzlich durch eine Bremseinrichtung festlegbar ist.

Vorzugsweise ist dabei die Bremseinrichtung als mechanisch wirkende Bremseinrichtung ausgebildet. Die Bremseinrichtung dient dabei insbesondere als automatische Bremseinrichtung, welche bei Erreichen vorgebbarer Positionen des Schlittens selbsttätig den Schlitten abbremst.

Vorzugsweise ist dabei vorgesehen, daß die Bremseinrichtung durch einen Endlageschalter betätigbar ist, welcher somit unabhängig von der Ansteuerung der Linearmotoren den Schlitten bei Erreichen einer durch den Endlageschalter festgelegten Endlage abbremst und festsetzt.

Alternativ oder ergänzend dazu ist vorteilhafterweise vorgesehen, daß die Bremseinrichtung als Ausfall oder Notaussicherung vorgesehen ist.

Vorzugsweise ist dabei die Bremseinrichtung durch einen Ausfallschalter oder Notausschalter betätigbar, so daß die Bremseinrichtung bei Ausfall der elektrischen Stromversorgung für die Linearmotoren oder Betätigung eines Notausschalters den Schlitten abbremst und festlegt.

Besonders zweckmäßig ist es, insbesondere um möglichst hohe Bremskräfte effektiv aufzubringen, wenn der Schlitten durch zwei in der Querrichtung im Abstand voneinander angeordnete Bremseinrichtungen festlegbar ist. Damit läßt sich insbesondere der Schlitten effektiv Abbremsen, vorzugsweise beim abrupten Abbremsen desselben vermeiden.

Bei einem vorteilhaften Ausführungsbeispiel einer erfindungsgemäßen Werkzeugmaschine ist vorgesehen, daß der Werkstückträger auf einem in einer dritten Richtung quer zur ersten und zweiten Richtung verfahrbaren dritten Schlitten gehalten ist.

Vorzugsweise ist dabei der Werkstückträger mit einem Drehantrieb gegenüber dem Maschinengestell um eine Achse drehbar, so daß das Werkstück in verschiedene Drehstellungen um eine Drehachse bringbar oder in eine Drehbewegung - beispielsweise in der Art einer Spindel - um diese Achse versetzbar ist.

Eine besonders zweckmäßige Lösung sieht vor, daß der Drehantrieb als NC-Achse ausgebildet ist, so daß Drehbewegungen um genau bestimmbare Winkel oder auch Drehbearbeitungen durchführbar sind.

Besonders vorteilhaft ist es dabei hinsichtlich des Drehantriebs, wenn dieser einen Direktantrieb umfaßt, das heißt kein zwischengeschaltetes Getriebe zwischen einem Antriebsmotor und dem Werkstückträger vorgesehen ist.

Die Vorteile eines derartigen Direktantriebs sind in dem Entfallen von Getriebeproblemen, wie Spiel, Reibung etc., und der erzielbaren hohen Dynamik zu sehen.

In Kombination mit einem Direktantrieb stellt es eine besonders bevorzugte Lösung hinsichtlich der erzielbaren Genauigkeit dar, wenn der Drehantrieb mit einem direkten die Drehstellungen des Werkstückträgers erfassenden Meßsystem versehen ist.

Um den Werkstückträger in einzelnen Drehstellungen exakt positionieren und fixieren zu können, ist vorzugsweise vorgesehen, daß der Drehantrieb eine Bremseinrichtung aufweist, mit der eine Fixierung des Werkstückträgers zur Bearbeitung des Werkstücks in jeder Drehstellung möglich ist.

Vorzugsweise ist - insbesondere bei einer Ausbildung der Werkzeugmaschine als Bearbeitungszentrum - der Drehantrieb als Drehtisch ausgebildet, mit welchem der Werkstückträger um eine Vertikalachse drehbar ist.

Vorzugsweise ist dabei der Werkstückträger in einer Aufnahme des Drehtisches lösbar und fixierbar, so daß das Werkstück mitsamt dem Werkstückträger auf dem Drehtisch fixiert, bearbeitet und danach mitsamt dem Werkstückträger weitertransportierbar ist.

Vorzugsweise ist der Werkstückträger dabei in der Aufnahme des Drehtisches hydraulisch spannbar.

Bevorzugterweise ist dabei der Werkstückträger als Palette ausgebildet, auf welcher das Werkstück aufgespannt ist.

Insbesondere im Fall eines um eine Vertikalachse drehbaren Drehtisches ist vorzugsweise vorgesehen, daß dieser Drehtisch auf einem Schlitten sitzt, welcher seinerseits auf einem einen Schlittenträger umfassenden Längsbett des Maschinengestells verfahrbar ist.

Bei einer vorteilhaften Version einer erfindungsgemäßen Werkzeugmaschine sitzt der zweite Schlittenträger in Form eines Ständers auf einem Maschinenbett.

Eine dritte Achse, welche quer zu der ersten und der zweiten Achse verläuft, wird gebildet durch einen längs eines vom Maschinenbett getragenen Längsbetts verfahrbaren Schlitten. Diese Aufteilung der Achsen erlaubt eine optimale Stabilität und, insbesondere bei Linearantrieben, eine optimale Verteilung der Massen um bei allen Achsen eine möglichst große Dynamik zu erhalten.

Vorzugsweise wird dabei das Längsbett von dem Maschinenbett umfaßt.

Eine besonders stabile Konstruktion ergibt sich dann, wenn sich an das Längsbett zwei Y-förmige Schenkel anschließen, wobei die Schenkel an ihren dem Längsbett abgewandten Enden mit dem Ständer verbunden sind.

Bei einem weiteren erfindungsgemäßen Ausführungsbeispiel ist vorgesehen, daß ein Arbeitsraum der Werkzeugmaschine von einer Zelle umschlossen ist. Um eine hochdynamische Bewegung des Schlittens zu erlauben ist dabei vorgesehen, daß eine Begrenzung der Zelle durch mindestens ein an einem der Schlitten gehaltenes und sich von diesem weg in seiner Bewegungsrichtung erstreckendes Schild gebildet ist, welches in allen Achsenpositionen des Schlittens in seiner Erstreckungsrichtung sich mindestens bis zu einer Begrenzung des Arbeitsraums in der Erstreckungsrichtung reicht.

Besonders vorteilhaft ist es dabei, wenn die Begrenzung der Zelle durch zwei sich in entgegengesetzte Richtungen erstreckende Schilde gebildet ist.

Es ist dabei vorzugsweise vorgesehen, daß ein von dem ersten Schlitten getragenes Werkzeug einen Bewegungsspalt zwischen diesen beiden Schilden durchgreift.

Um auch diesen Bewegungsspalt optimal und für hochdynamische Bewegungen geeignet abdecken zu können, ist vorzugsweise vorgesehen, daß auch dieser zumindest in einer Richtung durch ein von dem Schlitten bewegbares Schild abgedeckt ist.

Dieses Schild kann in beliebiger Art und Weise geführt sein. Vorzugsweise ist dieses Schild beiderseits des Bewegungsspaltes durch Längsführungen geführt.

Ein besonders vorteilhaftes Ausführungsbeispiel einer erfindungsgemäßen Werkzeugmaschine sieht vor, daß an dem zweiten Schlitten zwei sich in entgegengesetzte Richtungen erstreckende Schilde vorgesehen sind und an dem ersten Schlitten ein sich in einer Richtung erstreckendes Schild, während in der anderen Richtung eine Teleskopabdeckung angeordnet ist und daß die Schilde und die Teleskopabdeckung eine Begrenzung der Zelle bilden.

Hinsichtlich des Aufbaus der Schilde wurden bislang keine weiteren Angaben gemacht. Um eine gute Stabilität zu erreichen, ist ein Schild als Leichtbauplatte ausgebildet, welche eine vordere und eine hintere Lage aus Blech und dazwischen einen Hohlräume aufweisenden Versteifungskörper umfaßt.

Zweckmäßigerweise ist der Versteifungskörper eine Lage aus gewelltem Blech. Es ist aber auch denkbar, diesen als Wabenstruktur etc. auszuführen.

Besonders vorteilhaft ist eine Lösung, bei welcher die vordere und die hintere Lage aus Aluminium sind. Noch besser ist es, wenn auch der Versteifungskörper aus Aluminium ist und vorzugsweise der Versteifungskörper und die Lagen miteinander verklebt sind.

Ein weiteres vorteilhaftes Ausführungsbeispiel weist ein außerhalb der Zelle angeordnetes Werkzeugmagazin auf.

Vorzugsweise ist das Werkzeugmagazin als Magazinrad mit umfangsseitigen Werkzeugaufnahmen ausgebildet.

Um mit dem Werkzeugträger in einfacher Weise und möglichst rasch einen Werkzeugwechsel durchführen zu können, ist im Fall einer den Arbeitsraum umgebenden Zelle vorgesehen, daß eine Seitenwand mit einer Schwingtür versehen ist.

Vorzugsweise ist diese Schwingtür als Doppelschwingtür mit zwei Türflügeln ausgebildet.

Die Türflügel sind in beliebiger Weise zu öffnen, da bei einem möglichst schnellen Durchfahren der Doppelschwingtür ein möglichst rasches Öffnen der beiden Türflügel erforderlich ist, ist vorzugsweise vorgesehen, daß die Türflügel durch Beaufschlagung von dem Werkzeugträger in eine geöffnete Stellung bringbar sind.

Hierzu sind vorzugsweise Dämpfungselemente an den Türflügeln vorgesehen, welche die von dem Werkzeugträger auf die Türflügel wirkenden Beschleunigungskräfte reduzieren.

Um die Türflügel wieder in möglichst einfacher Weise in ihre geschlossene Stellung bringen und in dieser halten zu können, ist vorzugsweise vorgesehen, daß die Türflügel mittels Federelementen in Richtung ihrer geschlossenen Stellung beaufschlagt sind.

Da bei einem sehr schnellen Öffnen der beiden Türflügel die Gefahr besteht, daß diese von ihrer geöffneten Stellung durch Aufprall gegen einen Anschlag zurückfedern, ist vorzugsweise vorgesehen, daß jeder Türflügel mit einer Bremseinrichtung, vorzugsweise in Form einer Reibungsbremseinrichtung versehen ist, welche die freie Bewegbarkeit der Türflügel abbremst.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine perspektivische Gesamtansicht einer erfindungsgemäßen Werkzeugmaschine;
- Fig. 2: eine Draufsicht in Richtung eines Pfeils A in Fig. 1;
- Fig. 3: eine Draufsicht in Richtung eines Pfeils B in Fig. 1;

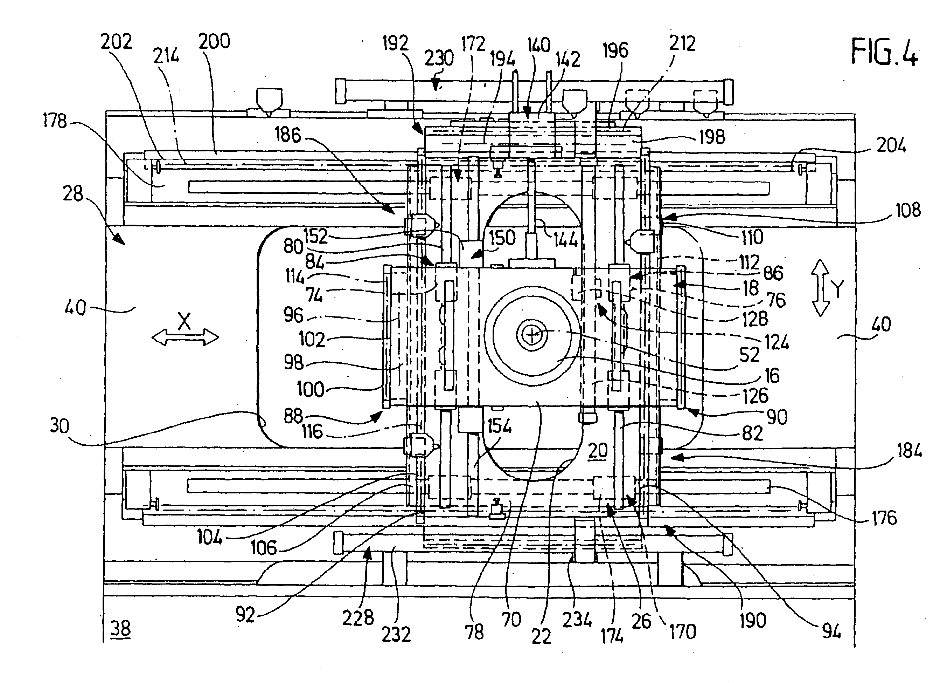

- Fig. 4: eine Draufsicht in Richtung eines Pfeils C in Fig. 1;

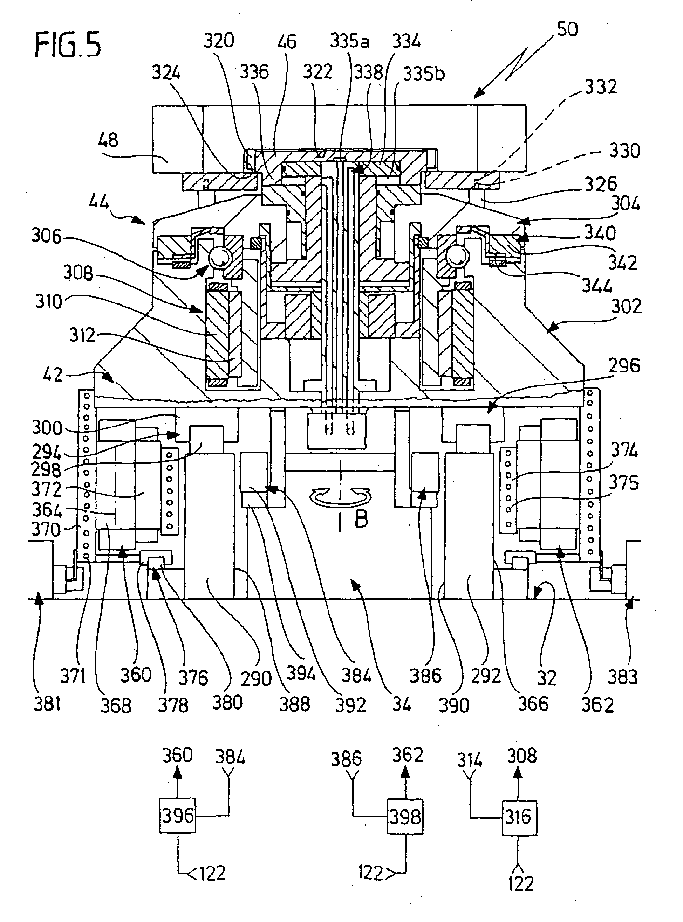

- Fig. 5: einen Schnitt durch einen Z-Schlitten mit Drehachsenantrieb;
- Fig. 6: eine perspektivische Darstellung eines zweiten Ausführungsbeispiels;
- Fig. 7: eine ausschnittsweise geschnittene Darstellung längs Linie 7-7 in Fig. 6;
- Fig. 8: eine ausschnittsweise geschnittene Darstellung längs Linie 8-8 in Fig. 6 und
- Fig. 9: eine ausschnittsweise geschnittene Darstellung längs Linie 9-9 in Fig. 6.

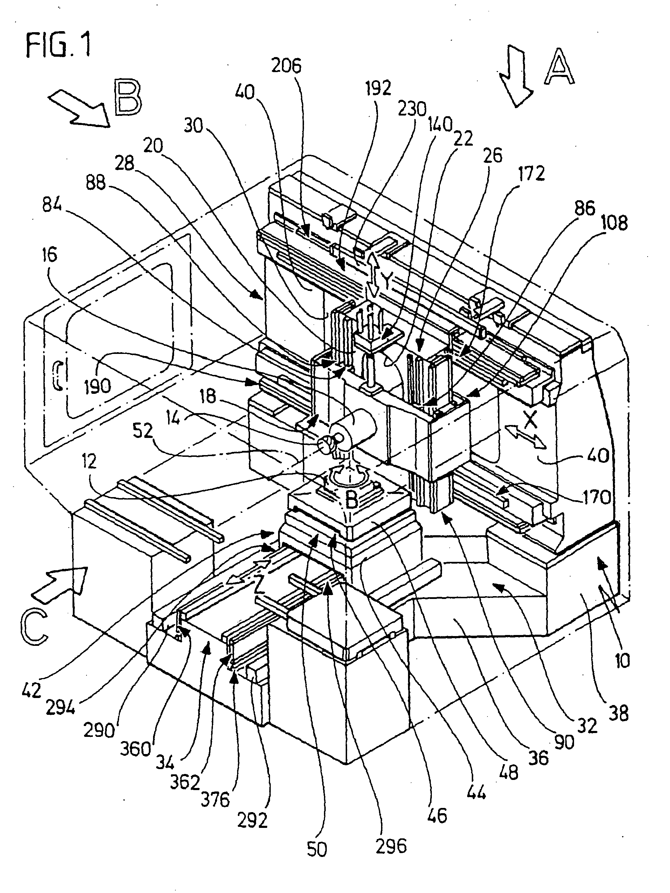

Ein in Fig. 1 dargestelltes erstes Ausführungsbeispiel einer erfindungsgemäßen Werkzeugmaschine umfaßt ein als Ganzes mit 10 bezeichnetes Maschinengestell, auf welchem ein Werkstück 12 positionierbar ist. Zur Bearbeitung des Werkstücks 12 mittels eines Werkzeugs 14 ist das Werkzeug 14 in einer Werkzeugspindel 16 aufgenommen, die ihrerseits am Maschinengestell 10 in einer X- und einer Y-Richtung verschiebbar ist. Zusätzlich ist das Werkstück 12 noch in einer Z-Richtung relativ zur Werkzeugspindel 16 und senkrecht zur X- und Y-Achse bewegbar, so daß insgesamt das Werkstück 12 und das Werkzeug 14 längs 3 senkrecht zueinander stehender Achsen, nämlich der X-, der Y- und Z-Achse zur Bearbeitung des Werkstücks 12 bewegbar sind.

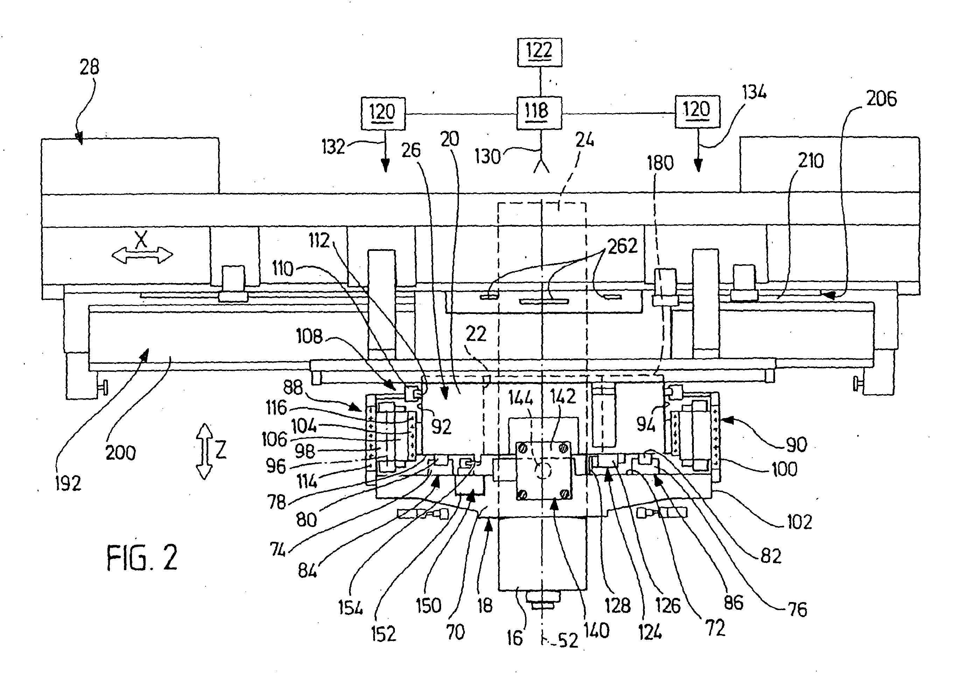

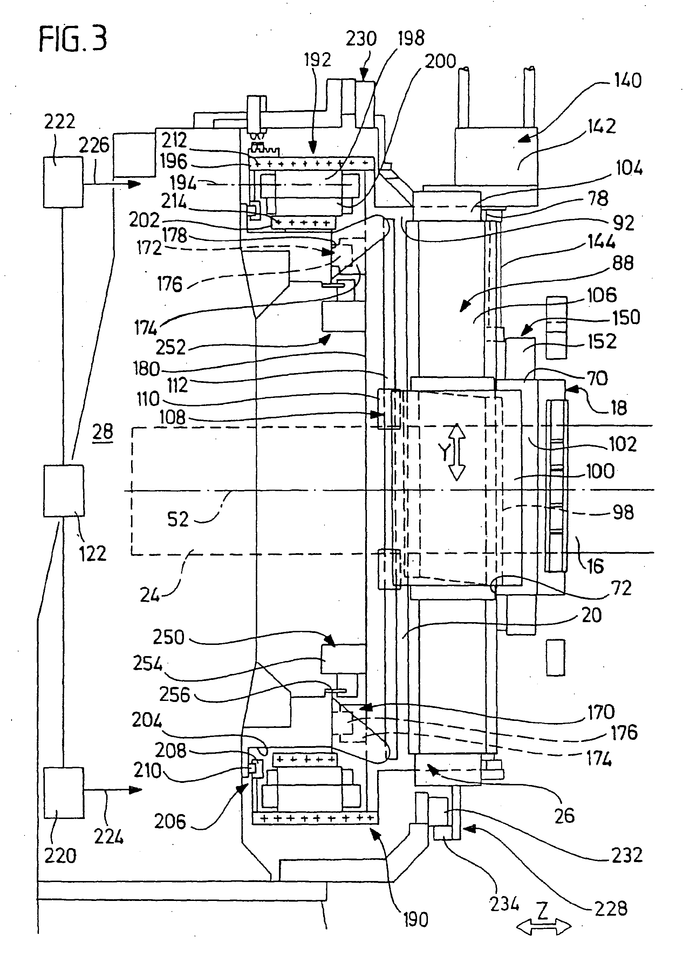

Um die Werkzeugspindel 16 längs der X- und Y-Achsen bewegen zu können, ist die Werkzeugspindel 16 an einem Y-Schlitten 18 gehalten, der seinerseits an einem Schlittenträger 20, ausgebildet als Joch mit einer Mittelöffnung 22 in Y-Richtung verschiebbar ist. Dabei erstreckt sich die Werkzeugspindel 16 mit einem dem Werkzeug 14 abgewandten rückwärtigen Abschnitt 24 (Fig. 2 und Fig. 3) durch die Mittelöffnung 22 hindurch. Die Mittelöffnung 22 ist daher so ausgebildet, daß die Werkzeugspindel 16 längs ihres maximalen Y-Verfahrwegs, vorgegeben durch die Bewegbarkeit des Y-Schlittens 18 relativ zum Schlittenträger 20, ungehindert, ohne Kollision mit Rändern der Mittelöffnung 22 bewegbar ist.

Der Schlittenträger 20 ist von einem X-Schlitten 26 umfaßt, der seinerseits längs der X-Achse an einem Ständer 28 verschieblich gehalten ist. Auch der Ständer 28 ist dabei als Joch ausgebildet und weist eine Mittelöffnung 30 aus, durch welche sich der rückwärtige Teil der Werkzeugspindel 24 hindurch erstreckt, wobei die Mittelöffnung 30 derart ausgebildet ist, daß die Werkzeugspindel 16 in dieser in allen möglichen Positionen entlang der X- und Y-Achse kollisionsfrei bewegbar ist.

Der Ständer 28 sitzt als Teil des Maschinengestells 10 auf einem ebenfalls vom Maschinengestell 10 umfaßten Maschinenbett 32, welches ein Längsbett 34 aufweist, das sich parallel zur Z-Achse und somit senkrecht zu einer von der X-Achse und der Y-Achse aufgespannten Ebene von dem Ständer 28 weg erstreckt. Zur stabilen Verbindung des Ständers 28 mit dem Längsbett 34 weist das Maschinenbett 32 zwei vom Längsbett Y-förmig abstehende Schenkel 36 auf, auf deren dem Längsbett 34 abgewandten Enden 38 der Ständer 28 sitzt, wobei die Enden 38 unterhalb senkrechter Jochbalken 40 des Ständers 28 liegen.

Auf dem Längsbett 34 ist parallel zur Z-Achse ein Z-Schlitten 42 geführt, welcher einen Drehachsenantrieb 44 trägt, mit welchem das Werkstück um eine B-Achse drehbar ist.

Der Drehachsenantrieb 44 bildet zusammen mit einer Aufnahme 46 für einen Werkstückträger 48 einen als Ganzes mit 50 bezeichneten Drehtisch für den Werkstückträger 48, welcher vorzugsweise als Palette zur Aufnahme des Werkstücks 12 ausgebildet ist.

Die B-Achse liegt dabei parallel zu der von der X- und Y-Achse aufgespannten Ebene und steht vorzugsweise senkrecht auf einer Spindelachse 52 der Werkzeugspindel 16.

Wie in Fig. 2 und 3 dargestellt, umfaßt der Y-Schlitten 18 eine Brücke 70, welche die Werkzeugspindel 16 trägt. Die Brücke 70 trägt auf einer Rückseite 72 Führungswagen 74 und 76, welche auf einer Vorderseite 78 des Schlittenträgers 20 im Abstand voneinander angeordneten und parallel zur Y-Achse verlaufenden Führungsschienen 80 und 82 geführt sind. Die Führungswagen 74 und 76 bilden mit den Führungsschienen 80 und 82 Hauptführungen 84 und 86 für den Y-Schlitten 80, welche vorzugsweise symmetrisch zur Spindelachse 52 angeordnet sind.

Beiderseits der Hauptführungen 84 und 86, und zwar auf den der Werkzeugspindel 16 abgewandten Seiten derselben, ist jeweils ein Linearmotor 88 bzw. 90 angeordnet, welche beide gemeinsam zum Verschieben des Y-Schlittens 18 in Richtung der Y-Achse dienen und dabei gleichzeitig miteinander betrieben werden.

Die beiden Linearmotoren 88 und 90 sind jeweils seitlich des Schlittenträgers 20 angeordnet und zwar so, daß sie neben einer Seitenfläche 92 bzw. 94 des Schlittenträgers 20 liegen und sich mit ihren Wicklungsebenen 96 parallel zur Y- und parallel zur Z-Richtung erstrecken.

Jeder der Linearmotoren umfaßt dabei ein Primärteil 98, welches an einem Halteflansch 100 des Y-Schlittens 18 auf einer der Seitenfläche 92 bzw. 94 zugewandten Seite montiert ist. Dabei erstreckt sich der Halteflansch 100 von einem äußeren Ende 102 der Brücke 70 ungefähr parallel zur Seitenfläche 94, wobei er diese übergreift.

Dem Primärteil 98 zugewandt ist an dem Schlittenträger 20 mittels eines Tragelements 104 ein Sekundärteil 106 angeordnet, welches auf dem Tragelement 104 auf einer dem Halteflansch 100 zugewandten Seite sitzt, während das Tragelement 104 auf der Seitenfläche 94 gehalten ist.

Zur Abstützung des Halteflansches 100 gegen die zwischen dem Primärteil 98 und dem Sekundärteil 106 senkrecht zur Wicklungsebene 96 wirkenden Kräfte ist der Halteflansch 100 auf seiner der Brücke 70 abgewandten Seite durch eine Zusatzführung 108 geführt, welche einen mit dem Halteflansch 100 verbundenen Führungswagen 110 und eine auf der Seitenfläche 94 sitzende und sich parallel zur Y-Achse erstreckende Längsführung 112 umfaßt. Diese Zusatzführung 108 führt somit den Halteflansch 100 präzise in definierter Ausrichtung zur Seitenfläche 94 des Schlittenträgers 20 und somit das Primärteil 98 in einem definierten Abstand zum Sekundärteil, 106 und zwar gemeinsam mit den Hauptführungen 84 und 86.

Zur Kühlung des Primärteils 98 und des Sekundärteils 106 von jedem der Linearmotoren 88 und 90 sind jeweils in den Halteelementen für diese, das heißt in dem Halteflansch 100 für das Primärteil 88 und in dem Tragelement 104 für das Sekundärteil 106, Kühlkanäle 114 bzw. 116 vorgesehen, so daß sowohl das Primärteil 98 als auch das Sekundärteil 106 durch das diese jeweils tragende Halteelement, das heißt den Halteflansch 100 und das Tragelement 104, kühlbar sind. Die Kühlkanäle 114 und 116 werden dabei von einem Kühlmedium durchströmt, das von einer Kühleinrichtung auf eine definierte Temperatur abgekühlt wird.

Die Ansteuerung der beiden Linearmotoren 88 und 90 erfolgt über jeweils eine gemeinsame für beide Linearmotoren 88 und 90 vorgesehene Ansteuerung 118, welche eine NC-Achsensteuerung darstellt, mit allerdings getrennten Stromversorgungen 120, wobei die vom Y-Schlitten 18 anzufahrende Position längs der Y-Achse von einer übergeordneten Maschinensteuerung 122 der Ansteuerung 118 vorgebbar ist.

Zur Erfassung der tatsächlichen Position des Y-Schlittens ist ein sich parallel zur Y-Achse erstreckendes Y-Meßsystem 124 vorgesehen, welches auf der Vorderseite 78 des Schlittenträgers 20, und zwar zwischen der Werkzeugspindel 16 und der Hauptführung 86, sitzt und einen Wegaufnehmer 126 sowie einen Wegfühler 128 aufweist, wobei der Wegaufnehmer 126 auf dem Schlittenträger 20 sitzt und der Wegfühler 128 mit der Brücke 70 verbunden ist.

Das Y-Meßsystem 124 erfaßt die Position des Y-Schlittens 18 relativ zur Y-Achse und meldet diese über eine Leitung 130 der Ansteuerung 118, der somit eine tatsächliche Y-Position vorgegeben ist, welche nach einem Vergleich mit der von der Maschinensteuerung 122 vorgegebenen anzufahrenden Y-Position zu einem über eine Zuleitung 132 bzw. 134 zum jeweiligen Linearmotor 88 bzw. 90 fließenden Wicklungsstrom für den jeweiligen Linearmotor 88 bzw. 90 führt.

Zur Erhöhung der Dynamik der Bewegung des Y-Schlittens 18 in Richtung der Y-Achse ist die auf den Y-Schlitten 18 aufgrund der Masse der Werkzeugspindel 16 und des Y-Schlittens 18 wirkende Schwerkraft durch ein pneumatisches Gegengewicht 140 ausgeglichen, welches einen Pneumatikzylinder 142 umfaßt, der an dem Schlittenträger 20 gehalten ist und dessen Kolbenstange 144 an der Brücke 70 vorzugsweise im Bereich der Werkzeugspindel 16 angreift. Der Pneumatikzylinder 142 ist dabei derart druckbeaufschlagt, daß er im wesentlichen die auf den Y-Schlitten 18 wirkende Schwerkraft ausgleicht, so daß mittels der Linearmotoren 88 und 90 im wesentlichen lediglich die Beschleunigungskräfte aufzubringen sind.

Um den Y-Schlitten noch zusätzlich in definierten Positionen längs der Y-Achse fixieren zu können, ist noch eine zwischen der Hauptführung 84 und der Werkzeugspindel 16 angeordnete Bremse 150 vorgesehen, welche ein Bremsbacken betätigendes Bremsorgan 152 umfaßt, das seinerseits an der Brücke 70 gehalten ist und eine Bremsleiste 154, welche an einer Vorderseite 78 des Schlittenträgers 20 gehalten ist.

Die Bremse 150 dient zur Fixierung des Y-Schlittens 20 bei Betätigung eines Not-Aus-Schalters oder bei Stromausfall, wobei im letzten Fall automatisch eine Betätigung der Bremse 150 erfolgt.

Der den Schlittenträger 20 umfassende X-Schlitten 26 ist seinerseits an dem jochartig ausgebildeten Ständer 28 verschiebbar gelagert, und zwar mittels zweier Hauptführungen 170 und 172, von denen jede einen Führungswagen 174 und eine Führungsschiene 176 umfaßt, wobei die Führungsschiene 176 auf einer Frontseite 178 des Ständers 28 sitzt, während der Führungswagen 174 auf einer Rückseite 180 des X-Schlittens 26 sitzt.

Die beiden Hauptführungen 170 und 172 sind dabei parallel zur X-Achse ausgerichtet und verlaufen im Abstand voneinander, vorzugsweise im Bereich von zwei einen Schlittenträger bildenden Querbalken 184 bzw. 186 des jochartigen Ständers 28.

Zum Antrieb des X-Schlittens 26 sind zwei Linearmotoren 190 und 192 vorgesehen, deren Wicklungsebene 194 parallel zur X-Richtung und parallel zur Z-Richtung verläuft. Dabei liegen die beiden Linearmotoren 190 und 192 ebenfalls seitlich der Querbalken 184 und 186, wobei der untere Linearmotor 190 unterhalb des unteren Querbalkens 184 und der obere Linearmotor 192 oberhalb des oberen Querbalkens 186 liegt.

Jeder der Linearmotoren 190 und 192 umfaßt ein von einem am X-Schlitten 26 angeordneten Halteflansch 196 getragenes Primärteil 198, welchem ein Sekundärteil 200 gegenüberliegt, das seinerseits von einem Tragelement 202 gehalten ist, welches an einer Seitenfläche 204 der Querbalken 184 bzw. 186 angeordnet ist. Der Halteflansch 196 übergreift dabei ebenfalls die Seitenfläche 204 des jeweiligen Querbalkens 184 bzw. 186.

Zur Abstützung des Halteflansches 196 ist ferner ebenfalls eine Zusatzführung 206 vorgesehen, welche einen Führungswagen 208 und eine Führungsschiene 210 umfaßt, wobei der Führungswagen 208 am Halteflansch 196 und die Führungsschiene 210 an dem jeweiligen Querbalken 184 bzw. 186 gehalten ist. Die Zusatzführung 206 greift dabei ebenfalls an einem dem X-Schlitten 26 abgewandten Ende des jeweiligen Halteflansches 196 an, so daß der jeweilige Linearmotor 190 bzw. 192 zwischen der Zusatzführung 206 und der jeweiligen Hauptführung 170 bzw. 172 liegt und das Primärteil 198 gegenüber dem Sekundärteil 200 durch die jeweilige Zusatzführung 206 und die jeweilige Hauptführung 170 bzw. 172 beidseitig abgestützt ist.

In gleicher Weise wie im Zusammenhang mit den Linearmotoren 88 bzw. 90 beschrieben, sind der Halteflansch 196 mit Kühlkanälen 212 und das Tragelement 202 mit Kühlkanälen 214 versehen, die ebenfalls mit Kühlmedium durchströmt sind, welches von der Kühleinrichtung auf eine definierte Temperatur abgekühlt wird.

Zum Betrieb der beiden Linearmotoren 190 und 192 sind zwei Ansteuerungen 220 und 222 mit jeweils diesen zugeordneter eigener Stromversorgung für den jeweiligen Linearmotor 190 bzw. 192 vorgesehen, welch letztere über Zuleitungen 224 bzw. 226 die Linearmotoren 190 und 192 mit Strom versorgen, wobei eine Vorgabe der Position längs der X-Achse durch die übergeordnete Maschinensteuerung 122 erfolgt.

Zur Erfassung der genauen X-Position des X-Schlittens 26 längs der X-Achse sind zwei Meßsysteme 228 und 230 vorgesehen, wobei das Meßsystem 228 nahe des Linearmotors 190, vorzugsweise auf der dem Ständer 28 abgewandten Seite desselben liegt und das Meßsystem 230 nahe dem Linearmotor 192, vorzugsweise auf der dem Querbalken 186 abgewandten Seite desselben.

Jedes der beiden Meßsysteme 228 bzw. 230 umfaßt einen Wegaufnehmer 232 und einen Wegfühler 234, wobei der Wegaufnehmer 232 mit dem Ständer 28 verbunden ist und der Wegfühler 234 mit dem X-Schlitten 26.

Der Ansteuerung 220 für den Linearmotor 190 ist das nahe diesem liegende Meßsystem 228 zugeordnet, während der Ansteuerung 222 für den Linearmotor 192 das Meßsystem 230 zugeordnet ist.

Aufgrund des großen Abstandes der Linearmotoren 190 und 192 in Richtung der Y-Achse und somit auch des großen Abstandes zwischen den Meßsystemen 228 und 230 dient die Zuordnung eines jeweils eigenen Meßsystems zu jeder der Ansteuerungen 220 und 222 dazu, diese beiden Ansteuerungen 220 und 222 völlig unabhängig voneinander als zwei getrennte NC-Achsensteuerungen, jedoch gleichzeitig arbeiten zu lassen, so daß jeder Linearmotor 190 bzw. 192 entsprechend den jeweiligen tatsächlichen Meßwerten des zugeordneten Meßsystems 228 bzw. 230 die von der Maschinensteuerung 222 geforderte X-Position geregelt anfährt. Dadurch ist eine aktive Parallelführung des X-Schlittens 26, und zwar parallel zur Y-Achse, erreichbar, so daß die parallele Ausrichtung des X-Schlittens 26 zur Y-Achse aktiv gesteuert erfolgt.

Zur Fixierung des X-Schlittens 26 in Positionen längs der X-Achse sind zusätzlich noch zwei Bremsen 250 und 252 vorgesehen, von welchen jede ein Bremsorgan 254 mit Bremsbacken und eine Bremsleiste 256 umfaßt, wobei die Bremsleiste 256 der Bremse 250 am Querbalken 184 und die Bremsleiste der Bremse 252 am Querbalken 186 gehalten sind, während die Bremsorgane 254 der beiden Bremsen 250 und 252 auf der Rückseite 180 des X-Schlittens 26 sitzen.

Beide Bremsen 250 und 252 sind zur Fixierung des X-Schlittens bei Betätigung eines Not-Aus-Schalters oder bei Stromausfall vorgesehen.

Das Längsbett 34 umfaßt zwei im Abstand voneinander und parallel zur Z-Achse verlaufende Tragbalken 290 und 292, welche einen Schlittenträger bilden und Hauptführungen 294 bzw. 296 für den Z-Schlitten 42 tragen. Jede der Hauptführungen umfaßt jeweils eine auf dem Tragbalken 290 bzw. 292 aufliegende Führungsschiene 298 und einen auf der Führungsschiene 298 verfahrbaren Führungswagen 300, welcher am Z-Schlitten 42 gehalten ist.

Der Z-Schlitten 42 umfaßt ein Gehäuse 302 des Drehachsenantriebs 44, an welchem ein als Ganzes mit 304 bezeichneter Rotor mittels eines Drehlagers 306 um die B-Achse drehbar gelagert ist.

Der Rotor 306 ist direkt durch einen als Ganzes mit 308 bezeichneten Motor angetrieben, dessen Statorteil 310 im Gehäuse 302 gelagert ist und dessen Rotorteil 312 drehbar am Rotor sitzt, wobei das Statorteil 310 und das Rotorteil 312 zwischen dem Drehlager 306 und dem Führungswagen 300 im Gehäuse 302 angeordnet sind.

Zur Erfassung der Drehstellungen des Rotors 304 relativ zum Gehäuse 302 ist radial innerhalb des Motors 308 ein Drehgeber 314 angeordnet, dieser Drehgeber 314 meldet die tatsächliche Drehstellung des Rotors 304 relativ zum Gehäuse 302 einer Ansteuerung 316, welche ihrerseits über eine Zuleitung den Motor 308 mit Strom versorgt, so daß die Drehbewegungen als NC-gesteuerte B-Achsenbewegungen durchführbar sind.

Die einzelnen Drehstellungen des Motors 308 werden über die Maschinensteuerung 122 der Drehachsen-Ansteuerung 316 vorgegeben.

Zur Fixierung des Werkstückträgers ist auf dem Rotor 304 die Aufnahme 46 vorgesehen, welche im Abstand voneinander angeordnete Rollenlager 320 aufweist, welche den Werkstückträger auf einer Unterseite 322 abstützen. Ferner greifen die Rollenlager 320 in Nuten 324 des Werkstückträgers ein, so daß der Werkstückträger durch Bewegen der Aufnahme 46 in Richtung auf das Gehäuse 302 ebenfalls in dieser Richtung beaufschlagbar und auf Auflagen 326 am Rotor 304 aufsetzbar ist. Diese Auflagen 326 dienen zur Zentrierung und genauen Ausrichtung des Werkzeugträgers 48 relativ zum Rotor 304 um eine exakte Positionierung des Werkstückträgers 48 relativ zum Rotor 304 und somit bezüglich der B-Achse und der Z-Achse zu erreichen. Vorzugsweise bilden die Auflagen 326 sich quer zur B-Achse erstreckende Auflageflächen und weisen außerdem noch Zentrierbolzen 330 auf, welche in entsprechende Zentrierbohrungen 332 am Werkstückträger 48 eingreifen, um diesen definiert bezüglich der B-Achse am Rotor 304 zu positionieren.

Zur Verschiebung der Aufnahme 46 zum Gehäuse 302 hin oder von diesem weg ist zu einem Oberteil des Rotors 304 ein stehender am Gehäuse 302 gehaltener Kolben 334 vorgesehen, an welchem ein vom Rotor 304 umfaßter Zylinder 336 in Richtung der Drehachse oder B-Achse bewegbar geführt ist. Dieser Zylinder 336 ist durch Beaufschlagen von Zylinderräumen 335a oder 335b mit Hydraulikmedium verschiebbar und trägt die Aufnahme 46 mit den Rollenlagern 320.

Eine Versorgung der Zylinderräume 335a, b im Rotor 304 erfolgt durch eine mittige und durch eine Kolbenstange des Kolbens 334 verlaufende stationäre Zuführung 338, die sich ausgehend vom Gehäuse 302 in den Rotor 304 hineinerstreckt und in Höhe der Zylinderräume 335a und 335b die Zylinderräume 335a und 335b mit ihren Hydraulikkanälen über Drehzuführungen verbindet.

Zur Fixierung des Rotors 304 relativ zum Gehäuse 302 ist zusätzlich noch eine Bremse 340 vorgesehen, welche ein Bremsorgan 342 und einen Bremsflansch 344 aufweist, wobei der Bremsflansch 344 starr mit dem Rotor 304 verbunden ist und das Bremsorgan 342 fest auf dem Gehäuse 302 sitzt.

Mit der Bremse 340 ist die Drehstellung des auf dem Werkstückträger 48 sitzenden Werkstücks 12 zur Bearbeitung mittels des Werkzeugs 14 fixierbar.

Zur Verschiebung des Z-Schlittens 42 längs der Z-Achse sind zwei Linearmotoren 360 und 362 vorgesehen, deren Wicklungsebenen 364 sich in einer Ebene parallel zur Z- und Y-Achse erstreckt. Die beiden Linearmotoren 360 und 362 liegen dabei seitlich neben den Tragbalken im Bereich einander abgewandter Seitenflächen 366 derselben.

Jeder der Linearmotoren 360 und 362 umfaßt ein Primärteil 368, welches an einem Halteflansch 370 gehalten ist, wobei der Halteflansch 370 seinerseits am Z-Schlitten gehalten ist und sich seitlich der Tragbalken 290 und 292 sowie deren Seitenflächen 366 übergreifend erstreckt. Dem Primärteil 368 gegenüberliegend ist ein Sekundärteil 372 angeordnet, welches seinerseits auf einem Tragelement 374 sitzt, das wiederum an der jeweiligen Seitenfläche 366 gehalten ist.

Ferner sind in dem Halteflansch 370 und in dem Tragelement 374 Kühlkanäle 371 bzw. 375 vorgesehen, welche in gleicher Weise wie bei der X-Achse oder der Y-Achse mit Kühlmittel durchströmt sind.

In gleicher Weise wie bei der Y-Achse und der X-Achse erfolgt eine Abstützung des Halteflansches 370 durch eine als Ganzes mit 376 bezeichnete Zusatzführung, welche einen Führungswagen 378 und eine Führungsschiene 380 umfaßt, wobei die Führungsschiene 380 mit dem jeweiligen Tragbalken 290 bzw. 292 verbunden ist und der Führungswagen 380 starr am Halteflansch 370 gehalten ist.

Die zwischen dem Primärteil 368 und dem Sekundärteil 372 wirkenden Kräfte werden somit in gleicher Weise wie bei der Y-Achse und der X-Achse durch die jeweilige Hauptführung 294 bzw. 296 und die entsprechende Zusatzführung 376 aufgenommen.

Zum Festlegen des Z-Schlittens 42 sind zusätzlich noch Bremsen 381 und 383 vorgesehen, welche vorzugsweise zwischen dem Längsbett 34 und den Halteflanschen 370 wirken, und in gleicher Weise wie die Bremsen 250 und 252 aufgebaut sind.

Zur Erfassung der Bewegung des Z-Schlittens 42 längs der Z-Achse ist jedem der Linearmotoren 360 und 362 ein Meßsystem 384 bzw. 386 zugeordnet, wobei die Meßsysteme jeweils auf einer Innenseite 388 bzw. 390 des jeweiligen Tragbalkens 290 bzw. 292 angeordnet sind, um möglichst dicht bei dem jeweiligen Linearmotor 360 bzw. 362 zu liegen.

Jedes der Meßsysteme 384 und 386 umfaßt einen fest mit dem Längsbett 34 verbundenen Wegaufnehmer 392 sowie einen mit dem Z-Schlitten 42 verbundenen Wegfühler 394.

Zum Betreiben der beiden Linearmotoren 360 und 362 ist jedem dieser eine Ansteuerung 396 bzw. 398 zugeordnet, und jeder dieser Ansteuerungen 396 ein Wegmeßsystem 384 bzw. 386 zur Erfassung der tatsächlichen Position in Z-Richtung. Beiden Ansteuerungen 396 und 398 wird durch die Maschinensteuerung 122 die anzufahrende Position längs der Z-Achse übermittelt, die diese dann mit den tatsächlichen, von den Meßsystemen 384 und 386 erfaßten Positionen vergleichen.

Beide Ansteuerungen 396 und 398 arbeiten unabhängig voneinander, so daß hierdurch eine aktive Parallelausrichtung des Z-Schlittens relativ zur X-Achse durchführbar ist, genau wie im Zusammenhang mit den Ansteuerungen 220 und 222 beschrieben.

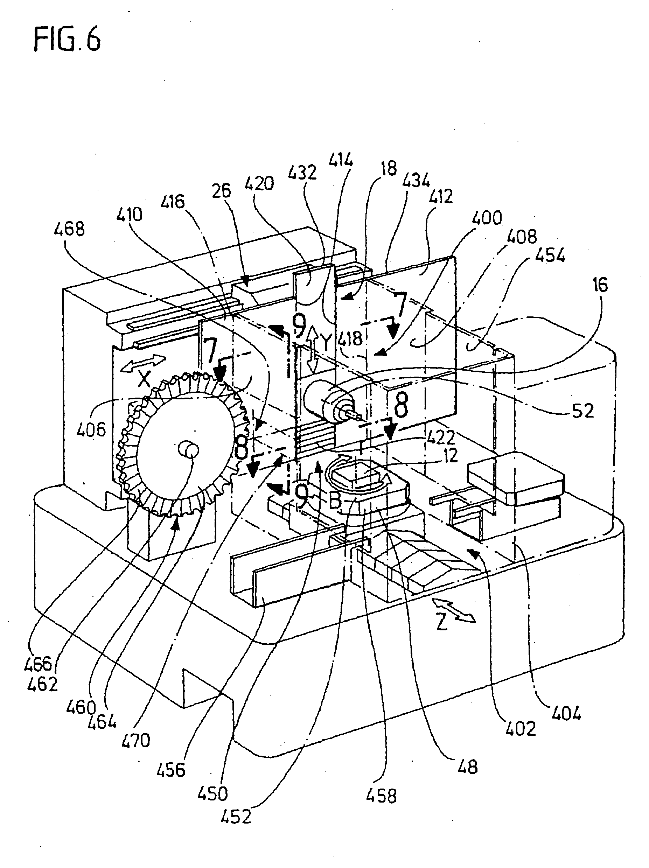

Bei einem zweiten Ausführungsbeispiel eines erfindungsgemäßen Bearbeitungszentrums, dargestellt in Fig. 6, ist beispielsweise zu der Lösung gemäß dem ersten Ausführungsbeispiel ein Arbeitsraum 400, in welchem eine Bearbeitung des Werkstücks 12 durch das Werkzeug 14 erfolgt, von einer Zelle 402 umschlossen, welche eine im wesentlichen senkrecht und parallel zur XY-Ebene stehende Vorderwand 404 umfaßt, die der Werkzeugspindel 16 gegenüberliegend angeordnet ist. Zwischen der Vorderwand 404 und dem Y-Schlitten 18 ist der Werkstückträger 48 entlang der Z-Achse verfahrbar. Die Zelle 402 umfaßt ferner zwei im Abstand voneinander angeordnete Seitenwände 406 und 408, zwischen welchen der als Ganzes mit 42 bezeichnete Z-Schlitten verfahrbar ist. Diese Seitenwände 406 und 408 erstrecken sich von der Vorderwand 404 in Richtung auf den sowohl in Y-Richtung als auch in X-Richtung verfahrbaren Y-Schlitten 18 mit der Werkzeugspindel 16.

Ein der Vorderwand 404 gegenüberliegender rückwärtiger Abschluß der Zelle 402 ist gebildet durch zwei am X-Schlitten 26 gehaltene Schilde 410 und 412, welche sich von einem in Y-Richtung erstreckenden Bewegungsspalt 414 für die Werkzeugspindel 16 jeweils in X-Richtung erstrecken und zwar soweit, daß sie jeweils beiderseits und in allen X-Positionen des X-Schlittens 26 an hinteren Seitenkanten 416 bzw. 418 der Seitenwände 406 bzw. 408 anliegen oder über diese in X-Richtung auf einer dem Arbeitsraum 400 gegenüberliegenden Seite überstehen.

Die beiden Schilde 410 und 412 sind starr an dem X-Schlitten 26 über ein zeichnerisch nicht dargestelltes Gestänge gehalten und bilden einen teilweise rückwärtigen Abschluß der Zelle 402.

Dieser Abschluß wird ergänzt durch eine den Bewegungsspalt 414 oberhalb der Werkzeugspindel 16 verschließende und als Schild ausgebildete obere Abdeckung 420 und eine unterhalb der Werkzeugspindel 16 den Bewegungsspalt 414 verschließende untere Abdeckung 422.

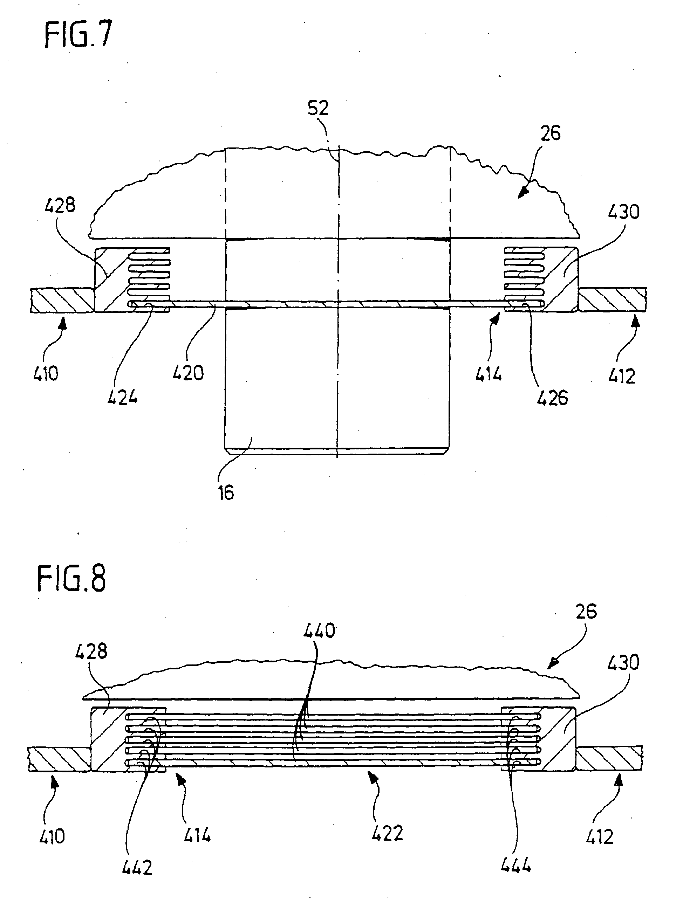

Die obere Abdeckung 420 ist dabei, wie in Fig. 7 dargestellt, eine am Y-Schlitten 18 gehaltene Platte, welche in Nuten 424 und 426 von den Bewegungsspalt 414 begrenzenden und in Y-Richtung verlaufenden Randleisten 428 und 430 geführt ist. Die Ausdehnung der Platte 420 ist dabei so gewählt, daß sie mit einer Oberkante 432 in allen Y-Positionen der Werkzeugspindel 16 mit einer Oberkante 434 der Schilde 410 und 412 abschließt oder nach oben über diese übersteht.

Dagegen ist die untere Abdeckung 422, wie in Fig. 8 dargestellt, eine sogenannte Teleskopabdeckung, welche eine Vielzahl von einander teleskopartig übergreifenden und übereinanderschiebbaren Abdeckplatten 440 umfaßt, die in einer Vielzahl von in Z-Richtung hintereinanderliegenden Nuten 442 bzw. 444 der Randleisten 428 bzw. 430 geführt sind. Eine oberste der Abdeckplatten 440 ist dabei an dem Z-Schlitten gehalten, während eine unterste der Abdeckplatten 440 mit einem Unterteil 450 der Zelle 402 verbunden ist, wobei das Unterteil 450 einen unteren Abschluß der Zelle 402 bildet.

Wie in Fig. 7 und 8 dargestellt, sind die beiden Schilde 410 und 412 Leichtbauplatten, welche zwei parallel zueinander verlaufende äußere Lagen 411 und eine zwischen diesen und mit diesen verbundene, vorzugsweise verklebte gewellte innere Lage 413 aus jeweils dünnem Blech, vorzugsweise Aluminiumblech aufweisen.

Ferner ist zur Beschickung des Arbeitsraums 40 mit einem Werkstückträger 18 jede der Seitenwände 406 und 408 mit einer Tür 452 bzw. 454 versehen, wobei die jeweilige Tür über einer Transportbahn 456 für den Werkstückträger 48 liegt, die im Abstand von dem Y-Schlitten 18 und von einer Bearbeitungsposition 458 des Werkstücks 14 parallel zur X-Richtung durch die Zelle 402 verläuft.

Außerhalb der Zelle 402 ist ferner ein als Ganzes mit 460 bezeichnetes Werkzeugmagazin angeordnet, welches ein um eine Achse 462 drehbares Magazinrad 464 umfaßt, wobei die Achse 462 vorzugsweise parallel zur Spindelachse 52 verläuft. An diesem Magazinrad 464 sind umfangsseitig Aufnahmen 466 für eine Vielzahl von Werkzeugen angeordnet.

Das Magazinrad 464 ist dabei so angeordnet, daß eine Übergabeposition 468 innerhalb des Y/X-Verfahrbereichs der Werkzeugspindel 16 liegt, so daß die Werkzeugspindel 16 mit dem Werkzeug 14 in die Übergabeposition 468 aufgrund ihrer Beweglichkeit in der Y/X-Ebene direkt einfahren kann.

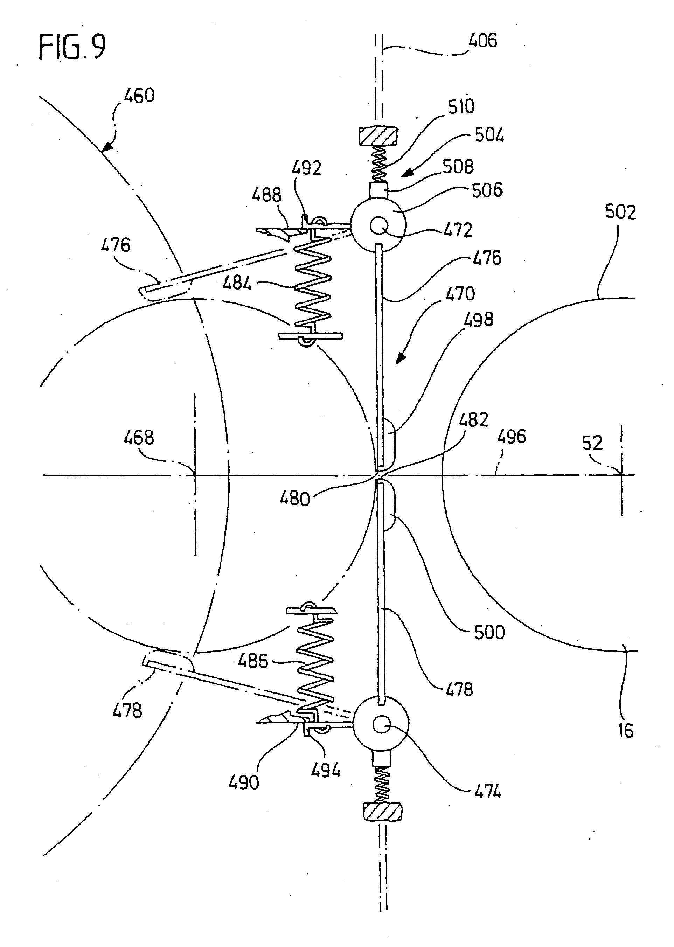

Hierzu ist im hinteren, sich an die Hinterkante 416 anschließenden Bereich der Seitenwand 406 eine im Detail in Fig. 9 dargestellte Doppelschwingtür 470 vorgesehen, welche zwei um zur Z-Achse parallele Achsen 472 bzw. 474 verschwenkbare an der Seitenwand 406 gelagerte Türflügel 476 bzw. 478 aufweist, welche in einem geschlossenen Zustand in geringem Abstand voneinander stehende Vorderkanten 480 bzw. 482 aufweisen, so daß im geschlossenen Zustand der Doppelschwingtür 470 die Zelle 402 geschlossen ist. Diese Türflügel 476 und 478 sind durch zwei Federelemente 484 und 486, in Richtung ihrer geschlossenen Stellung beaufschlagt, wobei die geschlossene Stellung durch zwei Anschläge 488 bzw. 490 festgelegt ist, gegen welche die Federelemente 484 und 486 zwei Schwenkarme 492 bzw. 494 anlegen. Die Federelement 484 bzw. 486 greifen dabei vorzugsweise an den Schwenkarmen an.

Ein Öffnen der Doppelschwingtür 470 erfolgt nun dadurch, daß die Werkzeugspindel 16 in eine definierte Y-Position 496 gefahren und dann in X-Richtung gegen die Türflügel 476 und 478 gefahren wird, wobei die Türflügel 476 und 478 hierfür mit Dämpfungselemente 498 bzw. 500, vorzugsweise im Bereich ihrer Vorderkanten 480 bzw. 482 versehen sind. Damit drückt die Werkzeugspindel 16 mit ihrem Außengehäuse 502 jeden der Türflügel 476 und 478 in eine geöffnete und in Fig. 9 gestrichelt dargestellte Stellung, fährt in die Übergabeposition 468 ein, übergibt das Werkzeug 14 und entnimmt nach Drehen des Magazinrades 464 ein neues Werkzeug 14 aus der Übergabeposition 468. In der Übergabeposition 468 (gestrichelt dargestellt) steht die Werkzeugspindel 16 so, daß ihr Außengehäuse 502 die Türflügel 476 und 478 in der geöffneten Stellung hält.

Jeder der Türflügel 476 und 478 ist zusätzlich noch mit einer Reibungsbremse 504 versehen, welche ein fest mit dem jeweiligen Türflügel 476 bzw. 478 verbundenes Reibrad 506 umfaßt, das seinerseits an einem Reibbacken 508, welcher durch ein federelastisches Element 510 gegen das Reibrad 506 beaufschlagt ist, anliegt. Hierdurch wird beim schnellen Öffnen der beiden Türflügel 476 und 478 ein Zurückschlagen der Türflügel 476 und 478 in Richtung ihrer geschlossenen Stellung verhindert, ferner wird dadurch ein langsames Schließen der Türflügel 476 und 478 sichergestellt.

## Patentansprüche

1. Werkzeugmaschine, umfassend ein Maschinengesteil (10), einen am Maschinengestell (10) angeordneten Werkstückträger (48) für ein zu bearbeitendes Werkstück (12), eine am Maschinengestell (10) bewegbar angeordnete Werkzeugspindel (16) zur Aufnahme eines Werkzeugs (14), einen ersten die Werkzeugspindel (16) tragenden Schlitten (18), welcher längs einer ersten Achse (Y) bewegbar und an einem ersten Schlittenträger (20) geführt ist, wobei der erste Schlittenträger (20) als eine erste Mittelöffnung (22) umgebendes Joch ausgebildet ist, dessen Mittelöffnung (22) die Werkzeugspindel (16) in allen Positionen längs ihres maximalen Verfahrwegs längs der ersten Achse (Y) kollisionsfrei durchsetzt, einen längs einer zweiten, quer zur ersten Achse (Y) verlaufenden Achse (X) verfahrbaren und den ersten Schlittenträger (20) umfassenden zweiten Schlitten (26), welcher an einem zweiten Schlittenträger (184, 186) geführt ist, wobei der zweite Schlittenträger (184, 186) Teil des Maschinengestells (10) ist und eine zweite Mittelöffnung (30) aufweist, und wobei die Werkzeugspindel (16) die zweite Mittelöffnung (30) im zweiten Schlittenträger (184, 186) in allen Positionen längs der ersten Achse (Y) und der zweiten Achse (X) kollisionsfrei durchsetzt, und einen ersten und einen zweiten Antrieb (190, 192; 88, 90) zur Durchführung einer Relativbewegung zwischen dem Werkzeug (14) und dem Werkstück (12) in Richtung der Achsen (Y, X),
**dadurch gekennzeichnet, daß** der zweite Schlittenträger als eine die zweite Mittelöffnung (30) umgebendes Joch ausgebildet ist, daß der Werkstückträger (48) auf einem in einer dritten Richtung (Z) quer zur ersten und zweiten Richtung (X; Y) verfahrbaren dritten Schlitten (42) gehalten ist, wobei das Maschinengestell (10) ein Längsbett (34) aufweist, längs welchem der dritte Schlitten (42) längs der dritten Achse (Z) verfahrbar ist, daß mindestens der erste Antrieb und der zweite Antrieb zwei parallel zu der jeweiligen Achse (X, Y, Z) ausgerichtete, in einer Querrichtung im Abstand voneinander angeordnete elektrische Linearmotoren (190, 192; 88, 90) umfaßt, daß der durch diese Linearmotoren (190, 192; 88, 90) bewegbare jeweilige Schlitten (26; 18) sich zwischen den beiden Linearmotoren (88, 90; 190, 192) erstreckt und daß eine Steuerung (220, 222; 118) vorgesehen ist, welche die Linearmotoren (190, 192; 88, 90) zum Verfahren des jeweiligen Schlittens (26; 18) gleichzeitig betreibt.

2. Werkzeugmaschine nach Anspruch 1, **dadurch gekennzeichnet, daß** die beiden Linearmotoren (88, 90) gemeinsam als eine einzige NC-Achse (Y) betrieben werden.

3. Werkzeugmaschine nach Anspruch 2, **dadurch gekennzeichnet, daß** die beiden Linearmotoren (190, 192) als voneinander unabhängige NC-Achsen (X; Z) ansteuerbar sind.

4. Werkzeugmaschine nach Anspruch 3, **dadurch gekennzeichnet, daß** jedem Linearmotor (190, 192) ein eigenes Wegmeßsystem (228, 230) zugeordnet ist.

5. Werkzeugmaschine nach Anspruch 3 oder 4, **dadurch gekennzeichnet, daß** der Schlitten (26; 42) aktiv gesteuert parallel verschiebbar ist.

6. Werkzeugmaschine nach einem der Ansprüche 1 bis 4, **dadurch gekennzeichnet, daß** die Linearmotoren (190, 192; 88, 90) jeweils beiderseits in äußeren Bereichen des Schlittens (26; 18) und eines Schlittenträgers (184, 186; 20; 290) angeordnet sind.

7. Werkzeugmaschine nach Anspruch 6, **dadurch gekennzeichnet, daß** die Linearmotoren (190, 192; 88, 90) an jeweils gegenüberliegenden Außenseiten des Schlittenträgers (184, 186; 20) oder des Schlittens (26; 18) und seitlich desselben angeordnet sind.

8. Werkzeugmaschine nach einem der voranstehenden Ansprüche, **dadurch gekennzeichnet, daß** einer der Schlitten (26; 18) an zwei zueinander parallelen und im Abstand voneinander verlaufenden Hauptführungen (170, 172; 84, 86) geführt ist.

9. Werkzeugmaschine nach Anspruch 8, **dadurch gekennzeichnet, daß** die Hauptführungen (170, 172; 84, 86) zwischen den Linearmotoren (190, 192; 88, 90) angeordnet sind.

10. Werkzeugmaschine nach Anspruch 8 oder 9, **dadurch gekennzeichnet, daß** die jeweiligen Linearmotoren (190, 192; 88, 90) jeweils zwischen einer Haupt- (170, 172; 84, 86) und einer Zusatzführung (206; 108) liegen.

11. Werkzeugmaschine nach einem der Ansprüche 1 bis 10, **dadurch gekennzeichnet, daß** die Linearmotoren (190, 192; 88, 90) gekühlte Primär- (198; 98) und Sekundärteile (200; 106) aufweisen.

12. Werkzeugmaschine nach Anspruch 11, **dadurch gekennzeichnet, daß** die Kühlung der Primär- und Sekundärteile (198, 200; 98, 106) durch Kühlkanäle (210, 214; 114, 116) in Halteelementen (196, 202; 100, 104) derselben erfolgt.

13. Werkzeugmaschine nach Anspruch 12, **dadurch gekennzeichnet, daß** die Kühlkanäle (210, 214; 114, 116) mit einem Kühlmedium durchströmt sind, welches von einer Kühleinrichtung kühlbar ist.

14. Werkzeugmaschine nach einem der voranstehenden Ansprüche, **dadurch gekennzeichnet, daß** einer der Schlitten (26; 18) durch eine Bremseinrichtung (250, 252; 150) festlegbar ist.

15. Werkzeugmaschine nach Anspruch 14, **dadurch gekennzeichnet, daß** der Schlitten (26) durch zwei in der Querrichtung im Abstand voneinander angeordnete Bremseinrichtungen (250, 252) festlegbar ist.

16. Werkzeugmaschine nach einem der voranstehenden Ansprüche, **dadurch gekennzeichnet, daß** der Werkstückträger mit einem Drehantrieb (50) gegenüber dem Maschinengestell (10) um eine Achse (B) drehbar ist.

17. Werkzeugmaschine nach Anspruch 16, **dadurch gekennzeichnet, daß** der Drehantrieb (50) einen Direktantrieb (308) umfaßt.

18. Werkzeugmaschine nach Anspruch 16 oder 17, **dadurch gekennzeichnet, daß** der Drehantrieb (50) eine Bremseinrichtung (340) aufweist.

19. Werkzeugmaschine nach einem der Ansprüche 16 bis 18, **dadurch gekennzeichnet, daß** der Drehantrieb als Drehtisch (50) ausgebildet ist, mit welchem der Werkstückträger (48) um eine Vertikalachse (B) drehbar ist.

20. Werkzeugmaschine nach Anspruch 19, **dadurch gekennzeichnet, daß** der Werkstückträger (48) in einer Aufnahme (46) des Drehtisches (50) lösbar und fixierbar ist.

21. Werkzeugmaschine nach Anspruch 19 oder 20, **dadurch gekennzeichnet, daß** der Drehtisch (50) auf einem Schlitten (42) sitzt, welcher seinerseits auf einem einen Schlittenträger (290, 292) umfassenden Längsbett (34) des Maschinengestells (10) verfahrbar ist.

22. Werkzeugmaschine nach einem der voranstehenden Ansprüche, **dadurch gekennzeichnet, daß** ein Arbeitsraum (400) der Werkzeugmaschine von einer Zelle (402) umschlossen ist und daß eine Begrenzung der Zelle (402) durch mindestens ein an einem der Schlitten (26, 18) gehaltenes und sich von diesem weg in seiner Bewegungsrichtung (X, Y) erstreckendes Schild (410, 412; 420) gebildet ist, welches in allen Achsenpositionen des Schlittens (26, 18) sich mindestens bis zu einer Begrenzung (416, 418; 434) des Arbeitsraums (400) reicht.

23. Werkzeugmaschine nach Anspruch 22, **dadurch gekennzeichnet, daß** die Begrenzung der Zelle (402) durch zwei sich in entgegengesetzte Richtungen erstreckende Schilde (410, 412) gebildet ist.

24. Werkzeugmaschine nach Anspruch 23, **dadurch gekennzeichnet, daß** ein von dem ersten Schlitten (18) getragenes Werkzeug (14) einen Bewegungsspalt (414) zwischen den beiden Schilden (410, 412) durchgreift.

25. Werkzeugmaschine nach Anspruch 24, **dadurch gekennzeichnet, daß** der Bewegungsspalt (414) zumindest in einer Richtung durch einen von dem ersten Schlitten (18) bewegbares Schild (420) abgedeckt ist.

26. Werkzeugmaschine nach einem der voranstehenden Ansprüche, **dadurch gekennzeichnet, daß** die Werkzeugmaschine einen von einer Zelle (402) umschlossenen Arbeitsraum (400) und ein außerhalb der Zelle (402) angeordnetes Werkzeugmagazin (460) aufweist und daß eine zwischen dem Arbeitsraum (400) und dem Werkzeugmagazin (460) liegende Seitenwand (406) der Zelle (402) mit einer Schwingtür (470) versehen ist.

27. Werkzeugmaschine nach Anspruch 26, **dadurch gekennzeichnet, daß** die Schwingtür als Doppelschwingtür (370) mit zwei Türflügeln (476, 478) versehen ist.

28. Werkzeugmaschine nach Anspruch 27, **dadurch gekennzeichnet, daß** die Türflügel (476, 478) durch Beaufschlagung von dem Werkzeugträger (16) in eine geöffnete Stellung bringbar sind.

29. Werkzeugmaschine nach Anspruch 28, **dadurch gekennzeichnet, daß** an den Türflügeln (476, 478) Dämpfungselemente (498, 500) vorgesehen sind.

30. Werkzeugmaschine nach einem der Ansprüche 27 bis 29, **dadurch gekennzeichnet, daß** die Türflügel (476, 478) mittels Federelementen (484, 486) in Richtung ihrer geschlossenen Stellung beaufschlagt sind.

31. Werkzeugmaschine nach einem der Ansprüche 27 bis 30, **dadurch gekennzeichnet, daß** jeder Türflügel (476, 478) mit einer Bremseinrichtung (504) versehen ist.

## Claims

1. A machine tool comprising a machine frame (10), a work-piece support (48) which is arranged on the machine frame (10) for supporting a work-piece (12) that is to be worked, a tool spindle (16) which is arranged such as to be moveable on the machine frame (10) and serves for accommodating a tool (14), a first carriage (18) which carries the tool spindle (16) and which is moveable along a first axis (Y) and is guided on a first carriage support (20), wherein the first carriage support (20) is in the form of a yoke surrounding a first central opening (22) and the tool spindle (16) extends through the first central opening (22) in collision free manner at every position along the maximum path length thereof along the first axis (Y), a second carriage (26) which is moveable along a second axis (X) that extends transversely to the first axis (Y) and which comprises the first carriage (20) and is guided on a second carriage support (184, 186), wherein the second carriage support (184, 186) is part of the machine frame (10), and has a second central opening (30), the tool spindle (16) extending through the second central opening (30) in the second carriage support (184, 186) in collision free manner at every position along the first axis (Y) and the second axis (X), and a fist and a second drive means (190, 192; 88, 90) for effecting a relative movement between the tool (14) and the work-piece (12) along the axes (Y,X), **characterised in that** the second carriage support is in the form of a yoke surrounding the second central hole (30), **in that** the work-piece support (48) is mounted on a third carriage (42) which is moveable in a third direction (Z) that is transverse to the frist and second directions (X; Y), wherein the machine frame (10) comprises a longitudinal bed (34) along which the third carriage (42) is moveable along the third axis (Z), **in that** at least the first drive means and the second drive means comprises two electric linear motors (190, 192; 88, 90) which are aligned in parallel with the respective axes (X, Y, Z) and are mutually spaced in a transverse direction, **in that** the respective carriages (26; 18), which are moveable by these linear motors (190, 192, 88, 90), extend between the two linear motors (88, 90; 190, 192), and **in that** there is provided a control system (220, 222; 118) which drives the linear motors (190, 192; 88, 90) such as to move the respective carriage (26; 18) simultaneously.

2. A machine tool in accordance with claim 1, **characterised in that** the two linear motors (88, 90) are driven in common as a single NC axis (Y).

3. A machine tool in accordance with claim 2, **characterised in that** the two linear motors (190, 192) are controllable as mutually independent NC axes (X; Z).

4. A machine tool in accordance with claim 3, **characterised in that** a separate path measuring system (228, 230) is associated with each linear motor (190, 192).

5. A machine tool in accordance with claim 3 or 4, **characterised in that** the carriage (26; 42) is displaceable in parallel in actively controlled manner.

6. A machine tool in accordance with any of the claims 1 to 4, **characterised in that** the linear motors (190, 192; 88, 90) are arranged at each side in outer regions of the carriage (26; 18) and a carriage support (184, 186; 20; 290).

7. A machine tool in accordance with claim 6, **characterised in that** the linear motors (190, 192; 88, 90) are arranged on respective opposite outer sides of the carriage support (184, 186; 20) or the carriage (26; 18) and laterally thereof.

8. A machine tool in accordance with any of the preceding claims, **characterised in that** one of the carriages (26; 18) is guided on two mutually spaced main guides (170, 172; 84, 86) that extend in parallel with one another.

9. A machine tool in accordance with claim 8, **characterised in that** the main guides (170, 172; 84, 86) are arranged between the linear motors (190, 192; 88, 90).

10. A machine tool in accordance with claim 8 or 9, **characterised in that** the respective linear motors (190, 192; 88, 90) are located between a respective main (170, 172; 84, 86) and a respective auxiliary guide (206; 108).

11. A machine tool in accordance with any of the claims 1 to 10, **characterised in that** the linear motors (190, 192; 88, 90) comprise cooled primary (198; 98) and secondary sections (200; 106).

12. A machine tool in accordance with claim 11, **characterised in that** the cooling of the primary and secondary sections (198, 200; 98, 106) is effected through cooling channels (210, 214; 114, 116) in mounting element therefor (196, 202; 100, 104).

13. A machine tool in accordance with claim 12, **characterised in that** a coolant, which is adapted to be cooled by a cooling device, flows through the cooling channels (210, 214; 114, 116).

14. A machine tool in accordance with any of the preceding claims, **characterised in that** one of the carriages (26; 18) is adapted to be restricted by a braking device (250, 252; 150).

15. A machine tool in accordance with claim 14, **characterised in that** the carriage (26) is adapted to be restricted by two braking devices (250, 252) which are mutually spaced in the transverse direction.

16. A machine tool in accordance with any of the preceding claims, **characterised in that** the work-piece support is rotatable about an axis (B) relative to the machine frame (10) by means of a rotary drive (50).

17. A machine tool in accordance with claim 16, **characterised in that** the rotary drive (50) comprises a direct drive means (308).

18. A machine tool in accordance with claim 16 or 17, **characterised in that** the rotary drive (50) comprises a braking device (340).

19. A machine tool in accordance with any of claims 16 to 18, **characterised in that** the rotary device is in the form of a rotary table (50) by means of which the work-piece support (48) is adapted to be rotated about a vertical axis (B).

20. A machine tool in accordance with claim 19, **characterised in that** the work-piece support (48) is adapted to be fixed in releasable manner in a seating (46) in the rotary table (50).

21. A machine tool in accordance with claim 19 or 20, **characterised in that** the rotary table (50) is seated on a carriage (42) which, for its part, is moveable over a longitudinal bed (34) of the machine frame (10) which comprises a carriage support (290, 292).

22. A machine tool in accordance with any of the preceding claims, **characterised in that** a work space (400) of the machine tool is enclosed by a cell (402) and **in that** a boundary of the cell (402) is formed by at least one shield (410, 412; 420) which is mounted on one of the carriages (26, 18) and extends away therefrom in the direction of movement thereof (X, Y) and which also extends at least up to a boundary (416, 418; 434) of the work space (400) in every axial position of the carriage (26, 18).

23. A machine tool in accordance with claim 22, **characterised in that** the boundary of the cell (402) is formed by two shields (410, 412) which extend in opposed directions.

24. A machine tool in accordance with claim 23, **characterised in that** a tool (14) supported by the first carriage (18) extends through a movement gap (414) between the two shields (410, 412).

25. A machine tool in accordance with claim 24, **characterised in that** the movement gap (414) is covered in at least one direction by means of a shield (420) that is moveable by the first carriage (18).

26. A machine tool in accordance with any of the preceding claims, **characterised in that** the machine tool comprises a work space (400) which is enclosed by a cell (402) and a tool magazine (460) which is arranged outside the cell (402), and **in that** a side wall (406) of the cell (402), which is located between the work space (400) and the tool magazine (460), is provided with a swing door (470).

27. A machine tool in accordance with claim 26, **characterised in that** the swing door (470) is in the form of a double swing door (370) which is provided with two wing doors (476, 478).

28. A machine tool in accordance with claim 27, **characterised in that** the wing doors (476, 478) are adapted to be moved into an open position when impinged by the tool support (16).

29. A machine tool in accordance with claim 28, **characterised in that** damping elements (498, 500) are provided on the wing doors (476, 478).

30. A machine tool in accordance with any of the claims 27 to 29, **characterised in that** the wing door (476, 478) are urged towards the closed position thereof by means of spring elements (484, 486).

31. A machine tool in accordance with any of the claims 27 to 30, **characterised in that** each wing door (476, 478) is provided with a braking device (504).

## Revendications

1. Machine-outil, comprenant un bâti de machine (10), un porte-pièce (48) disposé sur le bâti de machine (10) pour une pièce à usiner (12), une broche porte-outil (16) disposée de manière à être mobile sur le bâti de machine (10) et servant à loger un outil (14), un premier chariot (18) portant la broche porte-outil (16) et qui est déplaçable le long d'un premier axe (Y) et est guidé sur un premier support de chariot (20), le premier support de chariot (20) étant agencé sous la forme d'une culasse entourant la première ouverture centrale (22) dont la broche porte-outil (16) traverse l'ouverture centrale (22) dans toutes les positions, le long de son trajet maximum de déplacement suivant le premier axe (Y), sans collision, un second chariot (26) déplaçable le long d'un second axe (X) transversal par rapport au premier axe (Y), et qui comporte le premier support de chariot (20), qui est guidé sur un second support de chariot (184, 186), le second support de chariot (184, 186) faisant partie du bâti de machine (10) et comportant une seconde ouverture médiane (30), et la broche porte-outil (16) traversant la seconde ouverture médiane (30) dans le second support de chariot (184, 186) dans toutes les positions suivant le premier axe (Y) et le second axe (X), sans collision, et un premier et un second dispositifs d'entraînement (190, 192 ; 88, 90) pour l'exécution d'un déplacement relatif entre l'outil (14) et la pièce (12) dans la direction des axes (Y, X), **caractérisée en ce que** le second support de chariot est agencé sous la forme d'une culasse comportant la seconde ouverture médiane (30), **en ce que** le porte-pièce (48) est maintenu sur un troisième chariot (42) déplaçable dans une troisième direction (Z) transversalement aux première et deuxième directions (X ; Y), le bâti de machine (10) comportant un bord longitudinal (34) le long duquel le troisième chariot (42) est déplaçable le long du troisième axe (Z), **en ce qu'**au moins le premier et le second dispositifs d'entraînement comprennent deux moteurs électriques linéaires (190, 192 ; 88, 90) qui sont orientés parallèlement aux axes respectifs (X, Y, Z) et sont situés à distance l'un de l'autre dans une direction transversale, **en ce que** le chariot respectif (26 ; 18) déplaçable au moyen de ces moteurs linéaires (190, 192 ; 88, 90) s'étend entre les deux moteurs linéaires (88, 90 ; 190, 192) et **en ce qu'**il est prévu une unité de commande (220, 222 ; 118), qui active simultanément les moteurs linéaires (190, 192 ; 88, 90) pour déplacer le chariot respectif (26 ; 18).

2. Machine-outil selon la revendication 1, **caractérisée en ce que** les deux moteurs linéaires (88, 90) sont entraînés en commun sous la forme d'un axe unique de commande numérique (Y).

3. Machine-outil selon la revendication 2, **caractérisé en ce que** les deux moteurs linéaires (190, 192) peuvent être commandés en tant qu'axes de commande numérique (X, Z) indépendamment l'un de l'autre.

4. Machine-outil selon la revendication 3, **caractérisée en ce que** chaque moteur linéaire (190, 192) est associé à un système particulier de mesure de distance (228, 230).

5. Machine-outil selon la revendication 3 ou 4, **caractérisée en ce que** le chariot (26 ; 42) est déplaçable parallèlement en étant commandé activement.

6. Machine-outil selon l'une quelconque des revendications 1 à 4, **caractérisée en ce que** les moteurs linéaires (190, 192 ; 88, 90) sont disposés respectivement des deux côtés dans des zones extérieures du chariot (26 ; 18) et d'un porte support de chariot (184, 186 ; 20 ; 290).

7. Machine-outil selon la revendication 6, **caractérisée en ce que** les moteurs linéaires (190, 192 ; 88, 90) sont disposés sur des côtés extérieures respectivement opposés du support de chariot (184, 186 ; 20) ou du chariot (26 ; 18) et latéralement par rapport à ce dernier.

8. Machine-outil selon l'une quelconque des revendications précédentes, **caractérisée en ce que** l'un des chariots (26 ; 18) est guidé sur deux guides principaux (170, 172 ; 84, 86) qui sont parallèles entre eux et s'étendent à distance l'un de l'autre.

9. Machine-outil selon la revendication 8, **caractérisée en ce que** les guides principaux (170, 172 ; 84, 86) sont disposés entre les moteurs linéaires (190, 192 ; 88, 90).

10. Machine-outil selon la revendication 8 ou 9, **caractérisée en ce que** les moteurs linéaires (190, 192 ; 88, 90) sont situés respectivement entre un guide principal (170, 172 ; 84, 86) et un guide supplémentaire (206 ; 108).

11. Machine-outil selon l'une quelconque des revendications 1 à 10, **caractérisée en ce que** les moteurs linéaires (190, 192 ; 88, 90) comportent des pièces primaires (198 ; 98) et des pièces secondaires (200 ; 106).

12. Machine-outil selon la revendication 11, **caractérisée en ce que** le refroidissement des pièces primaire et secondaire (198, 200 ; 98, 106) est réalisé au moyen de canaux de refroidissement (210 ; 214 ; 114, 116) situés dans les éléments de retenue (196, 202 ; 100, 104) de ces pièces.

13. Machine-outil selon la revendication 12, **caractérisée en ce que** les canaux de refroidissement (210, 214 ; 114, 116) sont parcourus par un fluide de refroidissement, qui peut être refroidi par un dispositif de refroidissement.

14. Machine-outil selon l'une quelconque des revendications précédentes, **caractérisée en ce que** l'un des chariots (26 ; 18) peut être fixé par un dispositif de freinage (250, 252 ; 150).

15. Machine-outil selon la revendication 14, **caractérisée en ce que** le chariot (26) peut être fixé par deux dispositifs de freinage (250, 252), qui sont situés à distance l'un de l'autre dans la direction transversale.

16. Machine-outil selon l'une quelconque des revendications précédentes, **caractérisée en ce que** le porte-pièce peut être entraîné en rotation par un dispositif d'entraînement en rotation (50) autour d'un axe (B) par rapport au bâti de machine (10).

17. Machine-outil selon la revendication 16 **caractérisée en ce que** le dispositif d'entraînement en rotation (50) comprend un dispositif d'entraînement direct (308).

18. Machine-outil selon la revendication 16 ou 17, **caractérisée en ce que** le dispositif d'entraînement en rotation (50) comporte un dispositif de freinage (340).

19. Machine-outil selon l'une quelconque des revendications 16 à 18, **caractérisée en ce que** le dispositif d'entraînement en rotation est agencé sous la forme d'un plateau rotatif (50), à l'aide duquel le porle-pièce (48) peut tourner autour d'un axe vertical (B).

20. Machine-outil selon la revendication 19, **caractérisée en ce que** le porte-pièce (48) peut être détaché et peut être fixé dans un logement (46) du plateau rotatif (50).

21. Machine-outil selon la revendication 19 ou 20, **caractérisée en ce que** le plateau rotatif (50) est en appui sur un chariot (42), qui pour sa part est déplaçable sur un bord longitudinal (34) du bâti de machine (10) qui comprend un support de chariot (290, 292).

22. Machine-outil selon l'une quelconque des revendications précédentes, **caractérisée en ce qu'**un espace de travail (400) de la machine-outil est entouré par une cellule (402) et qu'une limite de la cellule (402) est formée par au moins un bouclier (410, 412 ; 420), qui est retenu sur l'un des chariots (26, 18) et s'étend à partir de ce dernier dans sa direction de déplacement (X, Y) et qui, dans toutes les positions d'axe du chariot (26, 18), s'étend au moins jusqu'à une limite (416, 418 ; 434) de l'espace de travail (400).

23. Machine-outil selon la revendication 22, **caractérisée en ce que** la limite de la cellule (402) est formée par des boucliers (410, 412) qui s'étendent dans des directions opposées.

24. Machine-outil selon la revendication 23,
**caractérisée en ce qu'**un outil (14) porté par le premier chariot (18) traverse une fente de déplacement (414) située entre les deux boucliers (410, 412).

25. Machine-outil selon la revendication 24, **caractérisée en ce que** la fente de déplacement (414) est recouverte au moins dans une direction, par un bouclier (420) déplaçable par le premier chariot (18).

26. Machine-outil selon l'une quelconque des revendications précédentes, **caractérisée en ce que** la machine-outil comporte un espace de travail (400), qui est entouré par une cellule (402) et un magasin à outils (460) disposé à l'extérieur de la cellule (402) et qu'une paroi latérale (406) de la cellule (402), qui est située entre l'espace de travail (400) et le magasin à outils (460), est équipée d'une porte battante (470).

27. Machine-outil selon la revendication 26, **caractérisée en ce que** la porte battante comporte, en tant que porte battante double (370), deux battants de porte (476, 478).

28. Machine-outil selon la revendication 27, **caractérisée en ce que** les battants (476, 478) de la porte peuvent être amenés dans une position ouverte sous l'effet de leur chargement par le porte-outil (16).

29. Machine-outil selon la revendication 28, **caractérisée en ce que** des éléments d'amortissement (498, 500) sont prévus sur les battants (476, 478) de la porte.

30. Machine-outil selon l'une quelconque des revendications 27 à 29, **caractérisée en ce que** les battants (476, 478) de la porte sont chargés au moyen d'éléments de ressorts (484, 486) en direction de leur position fermée.

31. Machine-outil selon l'une quelconque des revendications 27 à 30, **caractérisée en ce que** chaque battant (476, 478) de la porte est équipé d'un dispositif de freinage (504).
